## Europäisches Patentamt
## European Patent Office
## Office européen des brevets

(19)

(11) Veröffentlichungsnummer: **0 346 562 B1**

# EUROPÄISCHE PATENTSCHRIFT

(12)

(45) Veröffentlichungstag der Patentschrift:
**31.07.91 Patentblatt 91/31**

(51) Int. Cl.$^5$: **G01B 7/03**, G01B 21/04,
B23Q 17/00

(21) Anmeldenummer: **89101503.4**

(22) Anmeldetag: **28.01.89**

(54) **Vorrichtung zur induktiven Signalübertragung bei Tastköpfen.**

(30) Priorität: **26.04.88 DE 3813949**

(43) Veröffentlichungstag der Anmeldung:
**20.12.89 Patentblatt 89/51**

(45) Bekanntmachung des Hinweises auf die
Patenterteilung:
**31.07.91 Patentblatt 91/31**

(84) Benannte Vertragsstaaten:
**AT CH DE ES FR GB IT LI NL SE**

(56) Entgegenhaltungen:
**EP-A- 0 108 521**
**EP-A- 0 126 195**
**US-A- 4 145 816**

(73) Patentinhaber: **Dr. Johannes Heidenhain GmbH**
**Dr.-Johannes-Heidenhain-Strasse 5 Postfach 1260**
**W-8225 Traunreut (DE)**

(72) Erfinder: **Schmitt, Walter, Ing. (grad.)**
**Hochgernstrasse 22**
**W-8225 Traunreut (DE)**
Erfinder: **Ritz, Franz, Dipl.-Ing. (FH)**
**Grassauerstrasse 55**
**W-8212 Übersee (DE)**

**Beschreibung**

Die Erfindung bezieht sich auf eine Vorrichtung zur induktiven Signalübertragung bei Tastköpfen gemäß dem Oberbegriff des Anspruchs 1.

Es sind eine Vielzahl messender und schaltender Tastköpfe für Meß- und Werkzeugmaschinen bekannt. Bei beiden Ausführungsarten ist eine Signalübertragung zwischen dem Tastkopf und einer, außerhalb des Tastkopfes angeordneten Auswerteeinheit nötig.

In der DE-OS 23 41 251 ist beispielsweise ein messender Tastkopf mit induktiver Signalübertragung beschrieben, der in einer Spindel einer Werkzeugmaschine eingesetzt ist. Die Auslenkung eines Taststiftes des Tastkopfes wird in ein proportionales elektrisches Signal umgewandelt. Dieses elektrische Signal wird einer Trägerschwingung aufmoduliert und einer Übertragungsspule zugeführt. Zur Aufnahme der Übertragungsspule ist am Tastkopf ein Ring mit einer Nut gehaltert. Die Übertragungsspule wirkt mit einer Empfangsspule zusammen, welche in einer Nut eines Vorsprungs des Spindelgehäuses befestigt ist. Die an die Empfangsspule übertragenen modulierten Trägersignale werden von dort einer Auswerteeinheit zugeführt und weiterverarbeitet.

Der Ring zur Aufnahme der Übertragungsspule ist dabei so ausgebildet, daß er über die Spindel ragt. Diese Konstuktion hat den Nachteil, daß der Ring die Baugröße des Tastkopfes vergrößert und somit die Handhabung des Tastkopfes erschwert. Die Übertragungsspule des Ringes muß mit der Empfangsspule am Spindelgehäuse über einen relativ engen Luftspalt zusammenwirken. Durch die Ausbildung des Spulenträgers als Ring an der Außenseite des Tastkopfes kann kein konstanter Luftspalt eingehalten werden, dies umsomehr, da der Ring und die Übertragungsspule direkt den Umgebungsbedingungen ausgesetzt sind. Da auch die Empfängerspule bei eingesetztem Tastkopf frei liegt, kann es bei Verwendung des Tastkopfes in rauher Umgebung sehr leicht zu Unterbrechungen der Übertragungsstrecke oder gar zur Zerstörung der Spulen kommen.

Der Erfindung liegt die Aufgabe zugrunde, eine Vorrichtung zur induktiven Signalübertragung bei Tastköpfen zu schaffen mit der eine sichere und störungsunempfindliche Signalübertragung zwischen dem Tastkopf und einer, außerhalb des Tastkopfes untergebrachten Einrichtung ermöglicht wird. Weiterhin soll die Vorrichtung zur induktiven Signalübertragung kompakt aufgebaut sein.

Diese Aufgabe wird erfindungsgemäß durch die Merkmale des Anspruchs 1 gelöst.

Die mit der Erfindung erzielten Vorteile bestehen insbesondere darin, daß die Spulen zur induktiven Signalübertragung während des Meßbetriebes vor Umwelteinflüssen geschützt sind und dadurch ein zuverlässiger Meßbetrieb gewährleistet ist. Desweiteren wird mit der Erfindung eine platzsparende Anordnung der Spulen ermöglicht.

Vorteilhafte Ausbildungen der Erfindung sind in den abhängigen Ansprüchen angegeben.

Ausführungsbeispiele der Erfindung werden anhand der Zeichnungen näher erläutert.

Es zeigt

Figur 1  einen Axialschnitt durch einen, in eine Werkzeugmaschinenspindel eingesetzten Tastkopf mit der erfindungsgemäßen Signalübertragung,

Figur 2  einen Schnitt entlang der Linie II-II in Fig.1,

Figur 3  einen Schnitt entlang der Linie III-III in Fig. 1,

Figur 4  eine weitere Vorrichtung zur induktiven Signalübertragung im Schnitt,

Figur 5  ein Blockschaltbild der Signalübertragung.

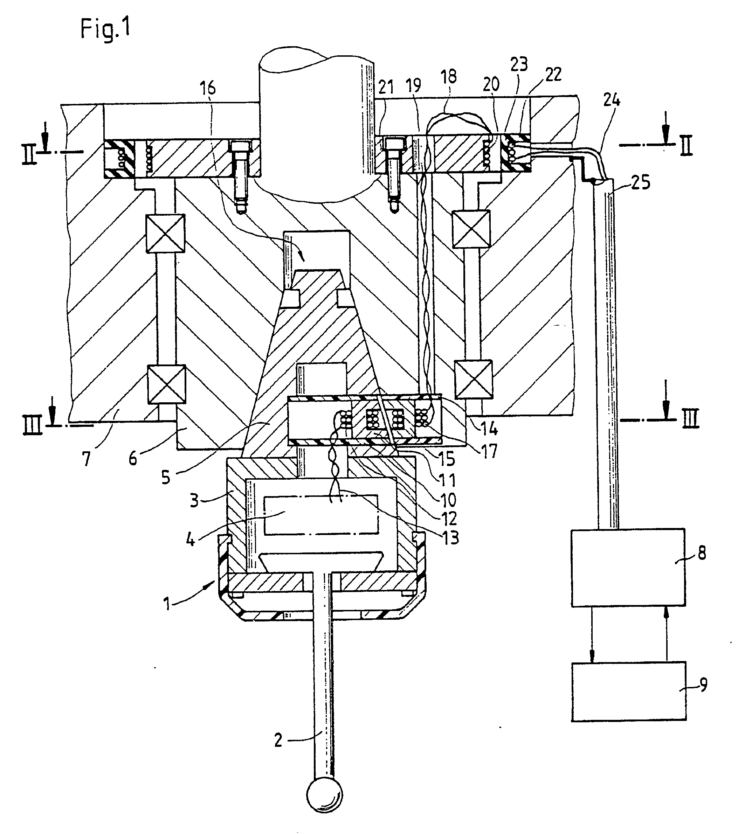

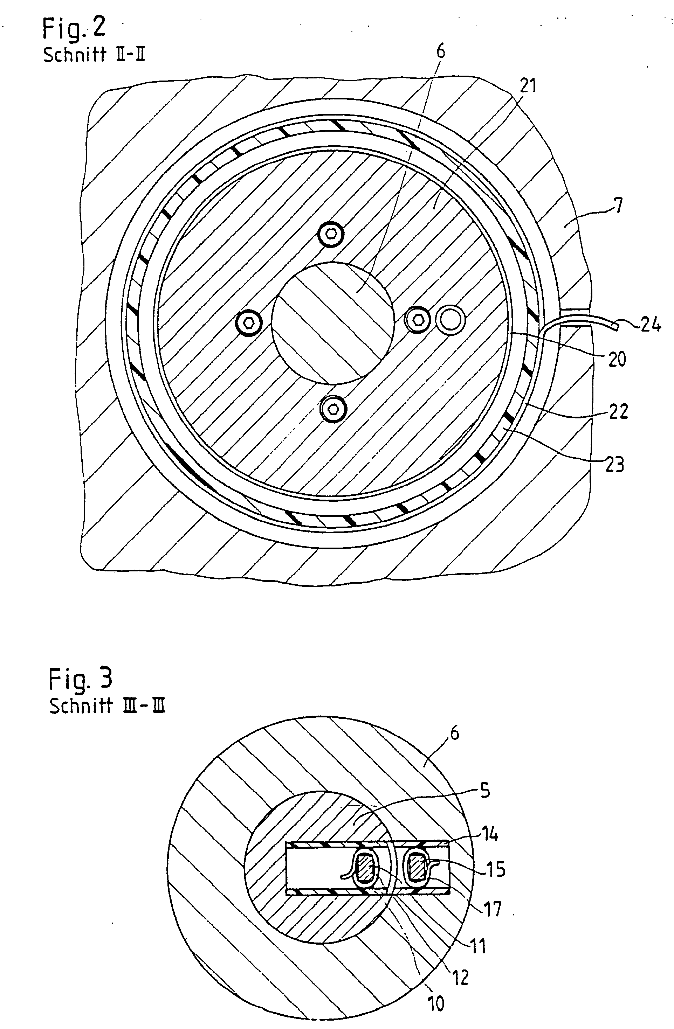

In den Figuren 1, 2 und 3 ist der Aufbau der gesamten Vorrichtung zur induktiven Signalübertragung gemäß der Erfindung ersichtlich. Der Tastkopf 1 ist im gezeigten Beispiel ein schaltender Tastkopf, bei dem die Auslenkung des Taststiftes 2 relativ zum Gehäuse 3 von einem Detektor 4 erfaßt wird. Der Detektor 4 ist eine Lichtschrankenanordnung, wie sie in der DE-PS 32 29 992 gezeigt ist, es kann aber auch ein kapazitiver Detektor oder ein Detektor in Form von Kontaktschaltern sein, wie in der EP-A2 0 254 903 beschrieben ist. Es sind aber auch noch andere Detektoren denkbar, die bei einer Linearbewegung oder einer Schwenkbewegung des Taststiftes 2 eine Änderung eines elektrischen Signals bewirken. Bei dem gezeigten schaltenden Tastkopf 1 wird das, sich bei der Auslenkung des Taststiftes 2 ändernde Signal bei einem vorgegebenen Signalpegel getriggert und es wird von dem Detektor 4 ein Antastimpuls in Form eines rechteckförmigen Impulses abgegeben.

Der Aufnahmedorn 5 des Tastkopfes 1 ist in einer Spindel 6 einer Werkzeugmaschine befestigt. Der Tastkopf 1 kann in der Spindel 6 wie ein Werkzeug ein- und ausgewechselt werden. Die Spindel 6 ist im Maschinenkörper 7 der Werkzeugmaschine drehbar gelagert. Das Abtastsignal wird vom Detektor 4 zu der Spindel 6 und von dort zu einer Auswerteeinheit 8 übertragen. Die Auswerteeinheit 8 ist am Maschinenkörper 7 befestigt und bereitet die Antastsignale zur Verarbeitung in einer numerischen Steuerung 9 auf. Bei der Antastung eines Werkstücks mittels des Tastkopfes 1 wird die Relativbewegung zwischen dem Werkstück und dem Tastkopf

2

1 von der numerischen Steuerung 9 gesteuert. Ebenso wird von der numerischen Steuerung 9 das Ein- und Auswechseln des Tastkopfes 1 vorgegeben.

Die Übertragung des Abtastsignals von dem Detektor 4 zu der Spindel 6 erfolgt induktiv. Hierzu ist in dem Aufnahmedorn 5 eine Buchse 10 mit einem ferromagnetischen Kern 11, auf dem eine Spule 12 gewickelt ist, integriert. Die Enden der Spule 12 sind über die elektrische Leitung 13 mit dem Detektor 4 verbunden. In der Spindel 6 ist eine Buchse 14 mit einem umwickelten ferromagnetischen Kern 15 integriert. Die zwei ferromagnetischen Kerne 11 und 15 sind U-förmig ausgebildet und es stehen sich jeweils die Enden der Schenkel mit Einhaltung eines kleinen Luftspaltes gegenüber. Der Luftspalt zur Übertragung des Antastsignals liegt in der Aufnahmeöffnung 16 der Spindel 6 und ist somit vor äußeren Einflüssen geschützt. Ebenso sind durch diese Anordnung die Spulen 12 und 17 sowie die Kerne 11 und 15 vor Beschädigungen geschützt. Am Aufnahmedorn 5 des Tastkopfes 1 sind nicht gezeigte Mittel vorgesehen um den Tastkopf 1 definiert zur Spindel 6 auszurichten, so daß sich während des Meßbetriebes die beiden Kerne 11 und 15 gegenüberstehen. Die Buchsen 10 und 14 sind vorzugsweise aus einem Material mit schlechter magnetischer Leitfähigkeit, so z.B. Messing.

Die Spulen 11 und 17 müssen nicht notwendigerweise einen ferromagnetischen Kern 11, 15 aufweisen, es muß nur die induktive Kopplung gewährleistet sein.

An den Enden der Spule 17 ist die elektrische Leitung 18 angeschlossen, die in einer Öffnung 19 der Spindel 6 verlegt ist und zu einer kreisringförmigen Übertragungsspule 20 führt. Als Träger der Übertragungsspule 20 dient eine Platte 21, die auf die Spindel 6 geschraubt ist. Die Wicklungen der Übertragungsspule 20 verlaufen auf dem gesamten Umfang der Platte 21.

Gegenüber der Übertragungsspule 20 ist eine kreisringförmige Empfängerspule 22 auf dem Träger 23 gewickelt, der fest mit dem Maschinenkörper 7 verbunden ist. Das Antastsignal wird somit unabhängig von der Winkelstellung zwischen Spindel 6 und Maschinenkörper 7 induktiv von der Übertragungsspule 20 zu der Empfängerspule 22 übertragen. Eine Signalübertragung ist sogar während einer Drehung der Spindel 6 möglich.

Die in Bezug auf den Maschinenkörper 7 ostsfeste Empfängerspule 22 ist mit ihren Enden über die elektrische Leitung 24 an die Auswerteeinheit 8 angeschlossen. Der Außenschirm 25 dieser elektrischen Leitung 24 ist mit dem Maschinenkörper 7 elektrisch leitend verbunden. Mit der Auswerteeinheit 8 arbeitet die numerische Steuerung 9 zusammen. Die Auswerteeinheit 8 kann auch Bestandteil der numerischen Steuerung 9 sein.

Die Übertragungsspule 20 muß nicht notwendigerweise auf dem Umfang der Platte 21 gewickelt sein, sie kann auch auf der freien, oben liegenden Fläche aufgebracht sein. Korrespondierend hierzu muß die Empfängerspule 23 ebenfalls flächig der Übertragungsspule gegenüberstehen.

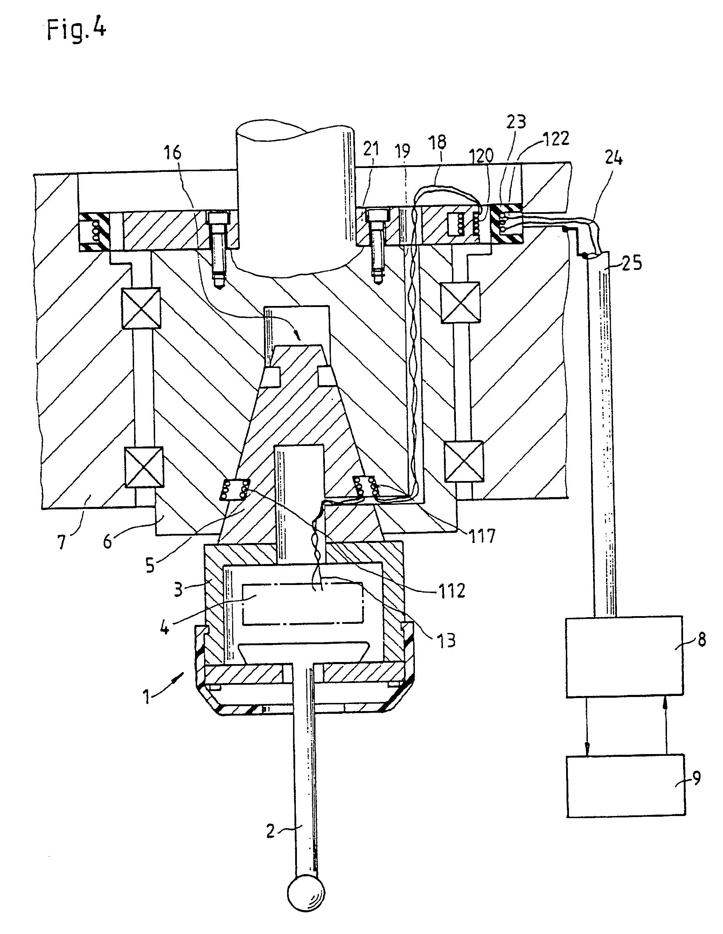

Die Figur 4 zeigt ein Ausführungsbeispiel, bei dem die induktive Signalübertragung von dem Aufnahmedorn 5 zu der Spindel 6 unabhängig von der Winkelstellung zwischen Aufnahmedorn 5 und Spindel 6 erfolgt. Hierzu ist die Spule 112 als kreisringförmige Wicklung auf dem Umfang des Aufnahmedorns 5 vorgesehen. Die korrespondierende Spule 117 in der Spindel 6 ist ebenfalls als kreisringförmig gewickelte Spule 117 ausgebildet.

Die Signalübertragung zwischen der Spindel 6 und dem Maschinenkörper 7 erfolgt ebenfalls winkelunabhängig, indem die Empfängerspule 122 über dem gesamten Umfang gewickelt ist, wobei die Übertragungsspule 120 aber nur einen kleinen Bereich des Umfangs einnimmt.

Aus Gründen der Übersichtlichkeit wurden für gleichartige Teile in allen Figuren die gleichen Bezugszeichen verwendet.

In nicht gezeigter Ausführungsform kann zur winkelunabhängigen induktiven Signalübertragung zwischen dem Tastkopf und der Spindel die eine oder die andere Spule über den gesamten Umfang gewickelt sein und die jeweils gegenüberliegende Spule so ausgebildet sein, daß sie nur auf einem kleinen Umfangsbereich der anderen Spule einwirkt.

Zusammenfassend sind erfindungsgemäß folgende Vorrichtungen zur induktiven Signalübertragung vorgesehen :

a) Winkelabhängige oder winkelunabhängige Übertragung zwischen dem Tastkopf und der Spindel innerhalb der Aufnahmeöffnung der Spindel. Bei der winkelabhängigen Übertragung nehmen beide Spulen jeweils nur einen kleinen Bereich des Umfangs ein, wobei bei der winkelunabhängigen Übertragung zumindest eine der beiden Spulen auf den gesamten Umfang gewickelt sein muß.

b) Winkelunabhängige Übertragung zwischen der Spindel und dem Maschinenkörper. Hierbei muß zumindest eine der Spulen über den gesamten Umfang, d.h. über den gesamten Drehwinkel von 360° gewickelt sein.

Als besonders vorteilhaft hat sich die Vorrichtung nach den Figuren 1 bis 3 herausgestellt. Durch die punktförmige Signalübertragung zwischen dem Tastkopf 1 und der Spindel 6 wird mit Hilfe der ferromagnetischen Kerne 11 und 15 (Ferritübertrager) ein sehr hoher Wirkungsgrad erzielt. Die großflächige Ausführung der sich auf dem gesamten Umfang gegenüberliegenden Übertragungsspule 20 und Empfängerspule 22 (Ringtransformator) hat ebenfalls einen hohen Wirkungsgrad (Übertragungsfaktor) der Signalübertragung zwischen Spindel 6 und Maschinenkörper 7 zur Folge.

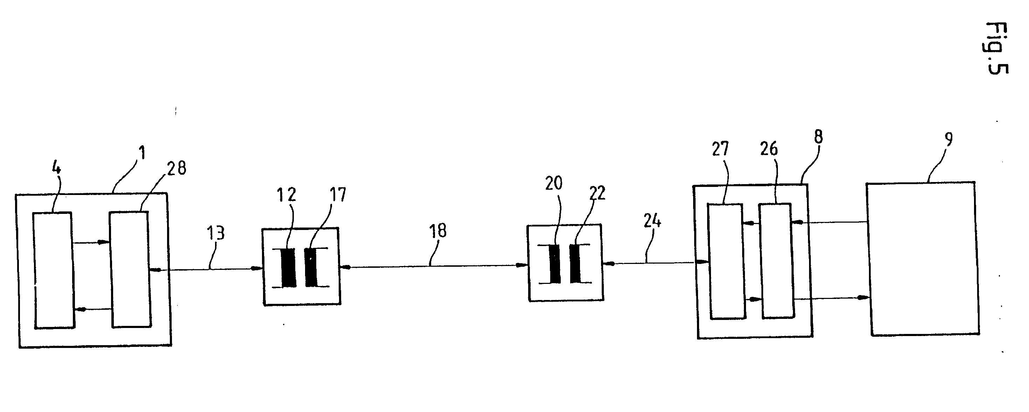

Das in Figur 5 gezeigte Blockschaltbild der induktiven Signalübertragung zeigt, daß die oben ausführlich dargestellten Vorrichtungen nicht nur zur Übertragung des Antastsignals vom Tastkopf 1 zu der numerischen Steuerung 9 geeignet sind, sondern eine Signalübertragung auch in der anderen Richtung möglich ist. So kann beispielsweise von der numerischen Steuerung 9 ein Aktivierungssignal über die Auswerteeinheit 8, die Empfängerspule 22, die Übertragungsspule 20, die Spule 17 und die Spule 12 zu dem Tastkopf 1 gelangen. Dieses Aktivierungssignal bringt den Tastkopf in die sog. Bereitschaftsstellung, d.h. daß der Detektor 4 Auslenkungen des Taststiftes 2 erkennen kann.

Vom Tastkopf 1 zu der numerischen Steuerung 9 können außer dem Antastsignal auch noch das Batteriezustandssignal sowie das Bereitschaftssignal übertragen werden. Bei eingewechseltem Tastkopf 1 ist bei jeder Spindelstellung sowohl eine Aktivierung des Tastkopfes 1 als auch ein Empfang der vom Tastkopf 1 gesendeten Signale durch die Steuerung 9 möglich.

Die Elektronik im Tastkopf 1 und in der Auswerteeinheit 8 ist nach Figur 5 so ausgebildet, daß eine Signalübertragung in beiden Richtungen über eine Strecke möglich ist. Eine Synchronisierstufe 26 steuert in diesem Fall die Sende- und Empfangseinheiten 27 und 28 so, daß die Signalübertragung entweder in der einen oder in der anderen Richtung erfolgt.

Die Vorrichtung zur Signalübertragung wurde am Beispiel eines Tastkopfes in einer Werkzeugmaschine aufgezeigt. Die erfindungsgemäße Vorrichtung ist aber auch bei Tastköpfen in Meßmaschinen einsetzbar.

**Patentansprüche**

1. Vorrichtung zur induktiven Signalübertragung zwischen einem Tastkopf (1) in einer Spindel (6) einer Meß- oder Bearbeitungsmaschine und einem Maschinenkörper (7) in dem die Spindel (6) um ihre Achse drehbar gelagert ist, wobei der Tastkopf (1) mittels eines Aufnahmedorns (5) in der Aufnahmeöffnung der Spindel (6) lösbar gehaltert ist und einen Detektor (4) enthält, der in Abhängigkeit einer Antastung eines Meßobjekts ein elektrisches Signal erzeugt, dadurch gekennzeichnet, daß zwischen dem Aufnahmedorn (5) und der Spindel (6) Koppelelemente (11, 12, 15, 1 112, 117) zur induktiven Kopplung vorgesehen sind und daß weiterhin zwischen der Spindel (6) und dem Maschinenkörper (7) Koppelelemente (20, 22, 120, 122) zur drehwinkelunabhängigen induktiven Kopplung vorgesehen sind, so daß die induktive Kopplung zwischen den Koppelelementen (20, 120) der Spindel (6) und den Koppelelementen (22, 122) des Maschinenkörpers (7) auch bei relativer Drehung zwischen Spindel (6) und Maschinenkörper (7) aufrechterhalten bleibt.

2. Vorrichtung nach Anspruch 1, dadurch gekennzeichnet, daß im Aufnahmedorn (5) oder an einer Fläche des Aufnahmedorns (5) eine Spule (12, 122) angeordnet ist und gegenüberliegend in oder an der Spindel (6) eine weitere Spule (17, 117) vorgesehen ist und das elektrische Signal des Detektors (4) zu der Spule (12, 112) des Aufnehmedorns (5) geführt ist, daß weiterhin beide Spulen (12, 17, 112, 117) so ausgeführt sind, daß sie bei, in der Spindel (6) drehfest eingesetztem Tastkopf (1) zumindest über einen Teilbereich des Umfangs des Aufnahmedorns (5) zusammenwirken.

3. Vorrichtung nach Anspruch 2, dadurch gekennzeichnet, daß die Spule (12) des Aufnahmedorns (5) auf einen ferromagnetischen Kern (11) gewickelt ist und daß dieser umwickelte Kern (11) in eine Öffnung des Aufnahmedorns (5) eingebracht ist und daß die Spule (17) der Spindel (6) ebenfalls auf einen ferromagnetischen Kern (15) gewickelt ist und daß dieser umwickelte Kern (15) in einer Öffnung der Spindel (6) eingebracht ist, so daß sich die Schenkel der Kerne (11, 15) bei eingesetztem Tastkopf (1) mit einem kleinen Spalt gegenüberstehen.

4. Vorrichtung nach Anspruch 2, dadurch gekennzeichnet, daß in einer umlaufenden Nut des Aufnahmedorns (5) die Spule (112) kreisringförmig gewickelt ist und ihr gegenüberliegend in einer umlaufenden Nut der Spindel (6) die weitere Spule (117) kreisringförmig eingebracht ist.

5. Vorrichtung nach Anspruch 2, dadurch gekennzeichnet, daß eine der beiden Spulen kreisringförmig in Form einer Ringspule gewickelt ist und die weitere Spule so ausgebildet ist, daß sie nur auf einen Teilbereich des Umfangs der gegenüberliegenden Spule einwirken kann.

6. Vorrichtung nach einem der Ansprüche 2 bis 5, dadurch gekennzeichnet, daß das in der Spule (17, 117) der Spindel (6) induzierte Signal zu einer Übertragungsspule (20, 120) geführt ist, die in oder an einer, dem Maschinenkörper (7) zugewandten Fläche der Spindel (6) angebracht ist und mit einer, im oder am Maschinenkörper (7) angebrachten Empfängerspule (22, 122) drehwinkelunabhängig zusammenwirken kann.

7. Vorrichtung nach Anspruch 6, dadurch gekennzeichnet, daß die Übertragungsspule (20) und die Empfängerspule (22) kreisringförmig gewickelt sind und somit über ihren gesamten Umfang zusammenwirken können.

8. Vorrichtung nach Anspruch 6, dadurch gekennzeichnet, daß die Übertragungsspule (20) oder die Empfangsspule (22, 122) kreisringförmig gewickelt ist.

9. Vorrichtung nach einem der Ansprüche 6, 7 oder 8, dadurch gekennzeichnet, daß das, in der Empfängerspule (22, 122) induzierte Signal über die elektrische Leitung (24) einer Auswerteeinheit (8) zugeführt ist.

10. Vorrichtung nach Anspruch 9, dadurch gekennzeichnet, daß jeweils die Auswerteeinheit (8) und der Tastkopf (1) eine Sende- und Empfangseinheit (27, 28) enthält, so daß über die induktiven Koppelelemente (11, 12, 15, 17, 112, 117) zwischen dem Tastkopf (1) und der Spindel (6) sowie über die induktiven Koppelelemente (20, 22, 120, 122) zwischen der Spindel (6) und dem Maschinenkörper (7) eine induktive Signalübertragung in beiden Richtungen möglich wird.

## Claims

1. Device for inductive signal transmission between a feeler head (1) in a spindle (6) of a measuring machine or machine tool and a machine body (7), in which the spindle (6) is mounted rotatably about its axis, wherein the feeler head (1) is releasably held by means of an arbor (5) in the receiving opening of the spindle and contains a detector (4) which generates an electrical signal in dependence on sensing a measuring object, characterized in that coupling elements (11, 12, 15, 17, 112, 117) for inductive coupling are provided between the arbor (5) and the spindle (6) and further in that coupling elements (20, 22, 120, 122) for inductive coupling independent of the angle of rotation are provided between the spindle (6) and the machine body (7), so that the inductive coupling between the coupling elements (20, 120) of the spindle (6) and the coupling elements (22, 122) of the machine body (7) is maintained also when there is relative rotation between spindle (6) and machine body (7).

2. Device according to claim 1, characterized in that a coil (12, 122) is arranged in the arbor (5) or on a surface of the arbor (5) and opposite thereto a further coil (17, 117) is provided in or on the spindle (6) and the electrical signal of the detector (4) is applied to the coil (12, 122) of the arbor (5), further in that both coils (12, 17, 112, 117) are so formed that they cooperate over at least a partial region of the periphery of the arbor (5), with the feeler head (1) fitted fast against rotation in the spindle (6).

3. Device according to claim 2, characterized in that the coil (12) of the arbor (5) is wound on a ferromagnetic core (11) and in that this wound core (11) is fitted in an opening of the arbor (5) and in that the coil (17) of the spindle (6) is likewise wound on a ferromagnetic core (15) and in that this wound core (15) is fitted in an opening of the spindle (6), so that the arms of the cores (11, 15) with the feeler head (1) inserted are opposed with a small gap.

4. Device according to claim 2, characterized in that the coil (112) is wound annularly in a circumferential groove of the arbor (5) and the further coil (117) is wound annularly opposite thereto in a circumferential groove of the spindle (6).

5. Device according to claim 2, characterized in that one of the two coils is wound annularly in the form of a ring coil and the other coil is so formed that it can act only over a part of the periphery of the opposed coil.

6. Device according to one of claims 2 to 5, characterized in that the signal induced in the coil (17, 117) of the spindle (6) is fed to a transfer coil (20, 120), which is fitted in or on a surface of the spindle (6) facing the machine body (7) and which can cooperate with a receiver coil (22, 22) fitted in or on the machine body (7) independently of the angle of rotation.

7. Device according to claim 6, characterized in that the transfer coil (20) and the receiver coil (22) are wound annularly and can thus cooperate over their whole periphery.

8. Device according to claim 6, characterized in that the transfer coil (20) or the receiver coil (22, 122) is wound annularly.

9. Device according to one of claims 6, 7 and 8, characterized in that the electrical signal induced in the receiver coil (22, 122) is applied through the electrical line (24) to a processing unit (8).

10. Device according to claim 9, characterized in that each of the processing unit (8) and the feeler head (1) includes a transmitter unit and a receiver unit (27, 28), so that an inductive signal transmission is possible in both directions through the inductive coupling elements (11, 12, 15, 17 112, 117) between the feeler head (1) and the spindle (6) as well as through the inductive coupling elements (20, 22, 120, 122) between the spindle (6) and the machine body (7).

## Revendications

1. Dispositif pour la transmission par induction de signaux entre un palpeur (1) monté dans une broche (6) d'une machine à mesurer ou à usiner et un corps de machine (7), dans lequel la broche (6) est montée tournante autour de son axe, le palpeur (1) étant fixé de manière démontable au moyen d'une queue de fixation (5) dans l'ouverture de fixation de la broche (6) et comportant un détecteur (4), qui produit un signal électrique en fonction d'un palpage d'un objet de mesure, **caractérisé** en ce que des éléments de couplage (11, 12, 15, 17, 112, 117) sont prévus entre la queue de fixation (5) et la broche (6) pour le couplage inductif, et en ce que, de plus, des éléments de couplage (20, 22, 120, 122) sont prévus entre la broche (6) et le corps de machine (7) pour le couplage inductif indépendant de l'angle de rotation, de manière telle que le couplage inductif entre les éléments de couplage (20, 120) de la broche (6) et les éléments de couplage (22, 122) du corps de machine (7) est conservé même dans le cas d'une rotation relative entre la broche (6) et le corps de machine (7).

2. Dispositif selon la revendication 1, **caractérisé** en ce qu'une bobine (12, 122) est disposée à l'intérieur de la queue de fixation (5) ou sur une surface de la queue de fixation (5), et une autre bobine (17, 117) est prévue en regard de celle-ci dans ou sur la broche (6), et le signal électrique du détecteur (4) est transmis à la bobine (12, 112) de la queue de fixation (5), en ce que les deux bobines (12, 17, 112, 117) sont réalisées de manière telle que, le palpeur (1) étant monté fixe en rotation dans la broche (6), elles coopèrent au moins sur une zone partielle de la circonférence de la queue de fixation (5).

3. Dispositif selon la revendication 2, **caractérisé** en ce que la bobine 12 de la queue de fixation (5) est enroulée sur un noyau ferromagnétique (11) et en ce que ce noyau avec son enroulement (11) est logé dans une ouverture de la queue de fixation (5), et en ce que la bobine (17) de la broche (6) est également enroulée sur un noyau (15) ferromagnétique et en ce que ledit noyau avec son enroulement (15) est logé dans une ouverture de la broche (6), de manière telle que les branches des noyaux (11, 15) soient situées en regard l'une de l'autre avec un faible jeu lorsque le palpeur (1) est monté.

4. Dispositif selon la revendication 2, **caractérisé** en ce que la bobine (112) est enroulée en forme de couronne dans une gorge circulaire de la queue de fixation (5) et l'autre bobine (117) en forme de couronne est logée dans une gorge circulaire de la broche (6) située en regard de celle-ci.

5. Dispositif selon la revendication 2, **caractérisé** en ce que l'une des deux bobines est enroulée en forme de couronne comme bobine annulaire, et l'autre bobine est réalisée de manière telle qu'elle ne peut agir que sur une zone partielle de la circonférence de la bobine située en regard.

6. Dispositif selon l'une des revendications 2 à 5, **caractérisé** en ce que le signal induit dans la bobine (17, 117) de la broche (6) est amené à une bobine de transmission (20, 120), qui est logée dans ou sur une surface de la broche (6) tournée vers le corps de machine (7) et peut coopérer indépendamment de l'angle de rotation avec une bobine de réception (22, 122) logée dans ou sur le corps de machine (7).

7. Dispositif selon la revendication 6, **caractérisé** en ce que la bobine de transmission (20) et la bobine de réception (22) sont enroulées en forme de couronne et peuvent ainsi coopérer sur l'ensemble de leur circonférence.

8. Dispositif selon la revendication 6, **caractérisé** en ce que la bobine de transmission (20) ou la bobine de réception (22, 122) est enroulée en forme de couronne.

9. Dispositif selon l'une des revendications 6, 7 ou 8, **caractérisé** en ce que le signal induit dans la bobine de réception (22, 122) est transmis à une unité d'exploitation (8) par l'intermédiaire de la ligne électrique (24).

10. Dispositif selon la revendication 9, **caractérisé** en ce que l'unité d'exploitation (8) et le palpeur (1) contiennent chacun une unité d'émission-réception (27, 28) de manière à permettre une transmission du signal par induction dans les deux directions entre le palpeur (1) et la broche (6) par l'intermédiaire des éléments de couplage inductifs (11, 12, 15, 17, 112, 117) ainsi qu'entre la broche (6) et le corps de machine (7) par l'intermédiaire des éléments de couplage inductifs (20, 22, 120, 122).

Fig.1

**Fig. 2**
Schnitt II-II

**Fig. 3**
Schnitt III-III

Fig.4

Fig.5